# EUROPEAN PATENT APPLICATION

(11) **EP 4 834 645 A1**
(43) Date of publication of application: **04.11.2026**
(21) Application number: 25221622.1
(22) Date of filing: 09.12.2025
(51) Int. Cl.: B60L 15/20, B60W 30/182, B60W 30/19

(54) **CONTROL APPARATUS AND METHOD OF ELECTRIC VEHICLE**

(30) Priority: 28.04.2025 KR 20250055135
(71) Applicant: Hyundai Motor Company, Seoul 06797 (KR); Kia Corporation, Seoul 06797 (KR)
(72) Inventor: CHO, Sung Hyun, 18280 Hwaseong-si, Gyeonggi-do (KR)
(74) Representative: Isarpatent

(57) **Abstract**

In a control apparatus and method of an electric vehicle that provide a virtual multispeed shifting sensation to increase the acceleration of the vehicle, a controller is disposed to have maximum torque characteristic information for a normal driving mode to limit the motor torque while driving in the normal driving mode and maximum torque characteristic information for a virtual shifting mode to limit the motor torque while driving in the virtual shifting mode, and a maximum allowable torque of the maximum torque characteristic information for the virtual shifting mode is set to a greater value than a maximum allowable torque of the maximum torque characteristic information for the normal driving mode.

## Description

### BACKGROUND OF THE PRESENT DISCLOSURE

### Field of the Present Disclosure

The present disclosure relates to a control apparatus and method of an electric vehicle that may provide a multi-speed shifting sensation similar to that generated in an internal combustion engine vehicle to increase driving fun in the electric vehicle without a transmission.

### Description of Related art

As is well known, internal combustion engine (ICE) vehicles are equipped with an engine and a multi-speed transmission, and allow information about an engine speed (engine RPM) and a gear on a cluster to guide a driver to recognize the real-time driving status of the vehicle.

On the other hand, electric vehicles use a reducer to lower the revolutions per minute (rpm) of a motor, which is a driving device to drive the vehicle, and are not equipped with a multi-speed transmission unlike internal combustion engine vehicles.

Due to the given configuration, electric vehicles may provide a smooth ride without a feeling of interruption during multi-speed shifting like internal combustion engine vehicles, but driving fun due to multi-speed shifting is weakened.

The above information disclosed in this Background section is only for enhancement of understanding of the background of the present disclosure and therefore it may contain information that does not form the related art that is already known in this country to a person of ordinary skill in the art.

### BRIEF SUMMARY

The present disclosure has been made in an effort to solve the above-described problems associated with related art, and it is an aspect of the present disclosure to provide a control apparatus and method of an electric vehicle that may provide a multi-speed shifting sensation similar to that generated in an internal combustion engine vehicle to increase driving fun in the electric vehicle without a transmission.

The aspects of the present disclosure are not limited to the above-mentioned aspects, and other aspects not mentioned herein will be clearly understood by persons having ordinary knowledge in the technical field to which the present disclosure pertain (hereinafter "those skilled in the art") from the following description.

According to various aspects of the present disclosure, the present disclosure provides a control apparatus of an electric vehicle including a controller determining a motor torque for vehicle driving and virtual shifting sensation generation while driving of the vehicle in a virtual shifting mode using virtual variable information determined based on vehicle driving information collected while the driving, and a vehicle driving motor controlled by the controller to output the determined motor torque, wherein the controller has maximum torque characteristic information configured so that a maximum allowable torque to limit the motor torque is set, the maximum torque characteristic information includes maximum torque characteristic information for a normal driving mode to limit the motor torque while driving in the normal driving mode and maximum torque characteristic information for a virtual shifting mode to limit the motor torque while driving in the virtual shifting mode, and a maximum allowable torque of the maximum torque characteristic information for the virtual shifting mode is set to a greater value than a maximum allowable torque of the maximum torque characteristic information for the normal driving mode.

According to various aspects of the present disclosure, the maximum torque characteristic information may be configured so that the maximum allowable torque is set to a value corresponding to a motor speed or a vehicle speed.

According to various aspects of the present disclosure, the maximum allowable torque of the maximum torque characteristic information for the virtual shifting mode may be set to a greater value than the maximum allowable torque of the maximum torque characteristic information for the normal driving mode under the same motor speed conditions or the same vehicle speed conditions.

According to various aspects of the present disclosure, the maximum allowable torque of the maximum torque characteristic information for the virtual shifting mode may be set to a greater value than the maximum allowable torque of the maximum torque characteristic information for the normal driving mode in some sections or all sections of the motor speed, or in some sections or all sections of the vehicle speed.

According to various aspects of the present disclosure, the maximum allowable torque of the maximum torque characteristic information for the normal driving mode may be a rated operating point upper limit determined in consideration of durability of power electronic components including a battery and the vehicle driving motor mounted in the vehicle.

According to various aspects of the present disclosure, the control apparatus may further include an input device operatively connected to the controller and configured to turn on the virtual shifting mode, and the controller may select the maximum torque characteristic information for the virtual shifting mode as the maximum torque characteristic information based on determining that the virtual shifting mode is turned on through the input device.

According to various aspects of the present disclosure, the controller may accumulate a time for which the motor torque for vehicle driving and virtual shifting sensation generation exceeds the maximum allowable torque of the maximum torque characteristic information for the normal driving mode, limit the motor torque while driving in the virtual shifting mode based on the maximum torque characteristic information for the virtual shifting mode until a total accumulated time reaches a first set time, and limit the motor torque while driving in the virtual shifting mode based on the maximum torque characteristic information for the normal driving mode based on determining that the total accumulated time reaches the first set time.

According to various aspects of the present disclosure, the controller may, during the accumulation of the time for which the motor torque for vehicle driving and virtual shifting sensation generation exceeds the maximum allowable torque of the maximum torque characteristic information for the normal driving mode, determine the total accumulated time by subtracting a time for which the motor torque for vehicle driving and virtual shifting sensation generation is less than or equal to the maximum allowable torque of the maximum torque characteristic information for the normal driving mode from an accumulated time up to a current time.

According to various aspects of the present disclosure, the controller may count and accumulate a new time in a state in which the total accumulated time reaches the first set time and the motor torque while driving in the virtual shifting mode is limited based on the maximum torque characteristic information for the normal driving mode, and limit the motor torque while driving in the virtual shifting mode based on the maximum torque characteristic information for the virtual shifting mode based on determining that a newly accumulated time reaches a second set time.

According to various aspects of the present disclosure, the present disclosure provides a control method of an electric vehicle including collecting, by a controller, vehicle driving information while driving, determining, by the controller, a motor torque for vehicle driving and virtual shifting sensation generation while driving of the vehicle in a virtual shifting mode using virtual variable information determined based on the vehicle driving information collected while driving, and controlling, by the controller, a vehicle driving motor to output the determined motor torque, wherein the controller limits the motor torque depending on a maximum allowable torque set in maximum torque characteristic information, the maximum torque characteristic information includes maximum torque characteristic information for a normal driving mode to limit the motor torque while driving in the normal driving mode and maximum torque characteristic information for a virtual shifting mode to limit the motor torque while driving in the virtual shifting mode, and a maximum allowable torque of the maximum torque characteristic information for the virtual shifting mode is set to a greater value than a maximum allowable torque of the maximum torque characteristic information for the normal driving mode.

Other aspects and exemplary embodiments of the present disclosure are discussed infra.

The above and other features of the present disclosure are discussed infra.

### BRIEF DESCRIPTION OF THE DRAWINGS

The above and other features of the present disclosure will now be described in detail with reference to certain exemplary embodiments thereof illustrated the accompanying drawings which are given hereinbelow by way of illustration only, and thus are not limitative of the present disclosure.
FIG. 1 is a diagram showing a maximum motor torque applied when a general electric vehicle is driven in a normal driving mode;
FIG. 2 is a diagram showing a maximum motor torque for each virtual gear applied when a virtual gear shift system is operated in the general electric vehicle;
FIG. 3 is a block diagram showing the configuration of an apparatus for generating a virtual shifting sensation in an exemplary embodiment of the present disclosure;
FIG. 4 is a diagram for explaining an area in which motor and battery outputs are temporarily increased in an exemplary embodiment of the present disclosure;
FIG. 5 is a diagram showing a maximum torque curve for the normal driving mode and a maximum torque curve for a virtual shifting mode in an exemplary embodiment of the present disclosure; and
FIG. 6 and FIG. 7 are flowcharts showing a control method according to an exemplary embodiment of the present disclosure.

It should be understood that the appended drawings are not necessarily to scale, presenting a somewhat simplified representation of various exemplary features illustrative of the basic principles of the present disclosure. The specific design features of the present disclosure as disclosed herein, including, for example, specific dimensions, orientations, locations, and shapes will be determined in part by the particularly intended application and use environment.

In the figures, reference numbers refer to the same or equivalent parts of the present disclosure throughout the several figures of the drawing.

### DETAILED DESCRIPTION

Hereinafter, reference will be made in detail to exemplary embodiments of the present disclosure, examples of which are illustrated in the accompanying drawings and described below. Specific structural or functional descriptions set forth in the exemplary embodiments of the present disclosure will be merely exemplarily given to describe the embodiments depending on the concept of the present disclosure, and the embodiments depending on the concept of the present disclosure may be embodied in different forms. Furthermore, the present disclosure should not be construed as being limited to the embodiments set forth herein, and it will be understood that the present disclosure includes all modifications, equivalents, or substitutes included in the spirit and technical scope of the present disclosure.

In the following description of the embodiments, terms, such as "first," "second," and the like, are used only to describe various elements, and these elements should not be construed as being limited by these terms. These terms are used only to distinguish one element from other elements. For example, a first element described hereinafter may be termed a second element, and similarly, a second element described hereinafter may be termed a first element, without departing from the scope of the present disclosure.

When an element or layer is referred to as being "on," "engaged with," "connected to," or "coupled to" another element or layer, it may be directly on, engaged with, connected to, or coupled to the other element or layer, or intervening elements or layers may be present. In contrast, when an element is referred to as being "directly on," "directly engaged with," "directly connected to," or "directly coupled to" another element or layer, there may be no intervening elements or layers present. Other words used to describe the relationship between elements, e.g., "between" versus "directly between," "adjacent" versus "directly adjacent," etc., should be interpreted in a like fashion.

Wherever possible, the same reference numbers will be used throughout the following description to refer to the same or like parts. The terminology used herein is for the purpose of describing particular embodiments only and is not intended to be limiting. As used herein, singular forms may be intended to include plural forms as well, unless the context clearly indicates otherwise. The terms "comprises," "comprising," "including," and "having" are inclusive and therefore specify the presence of stated features, integers, operations, operations, elements, components, and/or combinations thereof, but do not preclude the presence or addition of one or more other features, integers, operations, operations, elements, components, and/or combinations thereof.

As conventional technology, a virtual gear shift (VGS) system that implements a virtual shifting sensation in an electric vehicle without a multi-speed transmission is known, and an electric vehicle in which a virtual shifting sensation is generated and provided may be disposed with a motor and a virtual gear shift system instead of an engine and a transmission disposed in an internal combustion engine vehicle.

The virtual gear shift system generates and provides a multi-speed shifting sensation similar to that generated in a vehicle equipped with a multi-speed transmission, thereby allowing a driver to experience differentiated driving sensations and diverse driving fun.

In the virtual gear shift system, the torque of a motor, which is a driving device for driving a vehicle, may be controlled to implement gear shifting torque and a shifting sensation for each gear, and furthermore, various vehicle-mounted devices that may produce a virtual shifting sensation with vibration or shock, etc., may be used instead of the motor.

As an example of the vehicle-mounted apparatuses, use of a disconnector that is provided to interrupt power transmission between an auxiliary driving wheel and a motor for driving the auxiliary driving wheel to generate a virtual gear shifting shock is known.

Furthermore, in electric vehicles, a virtual engine speed (virtual engine RPM) and a virtual gear depending on the current driving status of the vehicle are displayed on a cluster through the virtual gear shift system, thereby being capable of providing the driver with a visual experience similar to driving an internal combustion engine vehicle.

In the conventional virtual gear shift system, the virtual engine speed and the virtual gear (a target gear, or the like), which are main variables required for generating the virtual shifting sensation, are virtual variable information determined in real time from vehicle driving information.

Furthermore, the virtual gear shift system may be configured to generate and output a virtual engine sound through an audio device, thereby being capable of providing the driver and passengers with an auditory effect similar to riding in an internal combustion engine vehicle.

In providing the virtual engine sound as described above, the virtual gear shift system may be configured to determine and control a sound source and volume depending on the virtual engine speed or the virtual engine speed and an accelerator pedal input value (an accelerator pedal opening amount, i.e., an APS value).

Hereinafter, before explaining the exemplary embodiments of the present disclosure, problems of the conventional virtual gear shift system will be described to help the understanding of the present disclosure.

In general, the virtual gear shift system performs motor control depending on a motor torque for each virtual gear determined based on real-time vehicle driving information in a shifting situation, and also performs shift control to transition the virtual gear from a current gear (N^{th} gear) to a target gear ((N-1)^{th} gear or (N+1)^{th} gear).

The shift control performed by the virtual gear shift system includes control to transition the virtual engine speed from a speed before shifting to a target speed after shifting, and control to transition the motor torque from a torque before shifting to a target torque after shifting.

According to the conventional technology, the virtual gear shift system performs artificial motor control to make the driver experience the same shifting sensation as in a vehicle using a multi-speed transmission, and controls operation of the vehicle driving motor to output a specific motor torque obtained by adding or subtracting a shifting sensation torque to or from the motor torque in a shifting situation.

The motor torque for vehicle driving and the target gear are determined based on vehicle driving information collected in real time by a controller of the virtual gear shift system during vehicle driving, and a virtual gear shifting intervention torque is determined according to the shifting situation.

As an example of a method of determining the virtual gear shifting intervention torque, when a shift class is determined from a current gear and a target gear by the controller, a virtual gear shifting intervention torque profile corresponding to the determined shift class is selected among preset virtual gear shifting intervention torque profiles for each shift class, and the virtual gear shifting intervention torque for virtual shifting sensation generation may be determined depending on the selected virtual gear shifting intervention torque profile. At the instant time, the virtual gear shifting intervention torque depending on a gear shifting progress rate (%) may be determined based on the selected virtual gear shifting intervention torque profile.

Accordingly, a final motor torque command having a command value as a torque obtained by reflecting the virtual gear shifting intervention torque in the motor torque for vehicle driving is generated by and output from the controller, and when the operation of the vehicle driving motor is controlled according to the output motor torque command, a motor torque that allows the driver to experience a shifting sensation may be output.

The shifting sensation generated and provided through the above-described virtual gear shifting process is a virtual shifting sensation that simulates an actual multi-speed shifting sensation in an internal combustion engine vehicle caused by a multi-speed transmission, and is provided so that the driver may actually experience the shifting sensation with his or her body.

Furthermore, in the virtual gear shifting process, the current gear and the target gear are virtual gears determined based on information indicating the driving status of an electric vehicle without a multi-speed transmission, that is, vehicle driving information, and may be determined by a gear shifting schedule map that uses actual driving variables or the actual driving variables and virtual variables as inputs in the controller.

The virtual gear shifting intervention torque is a specific motor torque reflected in a normal motor torque for vehicle driving in a shifting situation, and is a shifting sensation torque reflected in the motor torque to generate and provide the virtual shifting sensation.

The conventional virtual gear shift system implements a shifting sensation in consideration of the T-N (torque-speed) curve of a motor and the maximum output of a battery, and thus, when determining a final motor torque in which the virtual gear shifting intervention torque is reflected, the value of the T-N line is not used to the maximum, and the output is controlled by leaving a margin so that a shifting sensation torque may be input.

Accordingly, when the virtual gear shift system is in operation, the acceleration of the vehicle decreases compared to driving in a normal driving mode, and thus, an acceleration loss and a deterioration in zero to 100 (zero+100, or 0 to 100 km/h) performance may be caused.

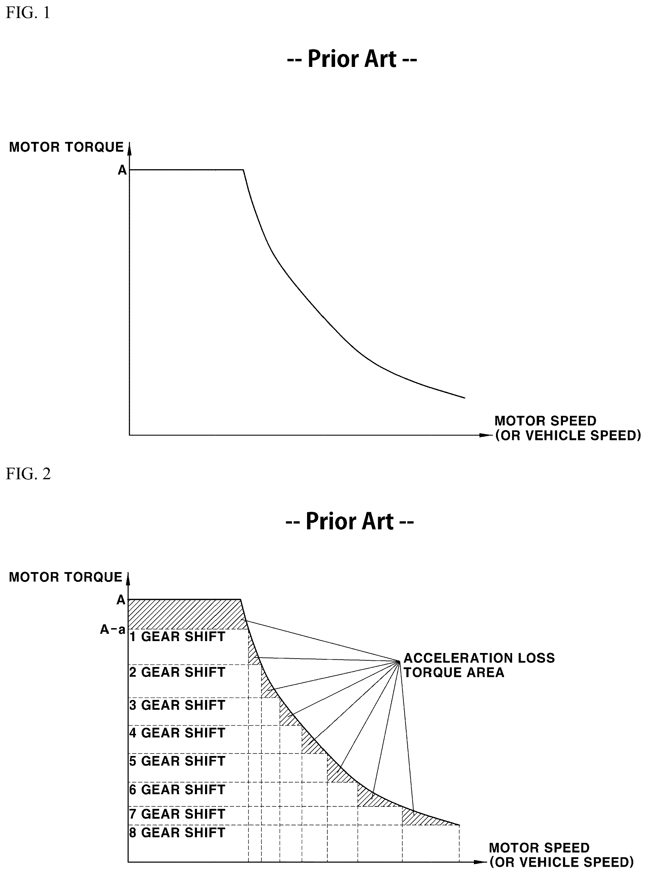

Referring to the drawings, FIG. 1 is a diagram showing a maximum torque curve applied when a general electric vehicle is driven in the normal driving mode, and illustrates a T-N curve showing the value of a maximum motor torque T set as a value depending on a motor speed N.

The maximum torque curve is unique characteristic information of the corresponding motor. That is, the maximum torque curve is the maximum torque characteristic information of the vehicle driving motor disposed in the corresponding vehicle, and may be provided as a curve showing a maximum motor torque value corresponding to a motor speed on a coordinate plane where the horizontal axis represents the motor speed N and the vertical axis represents the motor torque

In the example of FIG. 1, the maximum torque curve is set as a graph on the coordinate plane where the horizontal axis represents the motor speed, but the maximum torque curve may also be set as a graph on a coordinate plane where the horizontal axis represents a vehicle speed instead of the motor speed.

According to the conventional technology, in a vehicle to which the maximum torque characteristics of the motor, as shown in FIG. 1, are applied, the maximum torque characteristics of the vehicle driving motor may be intactly utilized to determine and control a motor torque for implementing the virtual shifting sensation, as described above.

FIG. 2 is a diagram showing a maximum motor torque for each virtual gear applied when the virtual gear shift system is operated in the general electric vehicle. When the virtual gear shift system is operated, the maximum torque characteristic information of the vehicle driving motor disposed in the corresponding vehicle, that is, the value of the maximum motor torque curve, as shown in FIG. 1, may be intactly utilized.

When the virtual gear shift system is operated, a torque value of the maximum torque curve of FIG. 1 is a maximum allowable torque value of the corresponding motor, and is used as a limit torque that limits the motor torque for each virtual gear.

That is, among torque values of the maximum torque curve shown in FIG. 1, the maximum torque value specified in advance for each virtual gear becomes the limit torque that limits the final motor torque. When the virtual gear shift system is operated, a motor torque in the current virtual gear that artificially implements a virtual shifting sensation is limited by the limit torque for each virtual gear, which is the torque value of the maximum torque curve.

However, when determining the final motor torque for artificially generating the virtual shifting sensation based on the maximum motor torque value of FIG. 1, a torque margin is required to ensure that the final motor torque is not limited by the maximum motor torque, which is the limit torque.

Due to the hardware characteristics of the motor, the maximum torque of the vehicle driving motor tends to decrease rapidly at a certain speed, and in the conventional virtual gear shift system, a torque margin is secured to implement push-feel, which is a specialized shifting sensation experienced in high-performance vehicles among internal combustion engine vehicles.

Ultimately, this leads to a problem in that there is an area where the maximum acceleration is not usable to generate a virtual shifting sensation when the virtual gear shift system is operated, that is, an acceleration loss torque area.

FIG. 2 illustrates the maximum motor torque for each virtual gear (e.g., 7000 Nm for 1^{st} gear) when the virtual gear shift system is operated, and the "acceleration loss torque area" represents the area of a margin torque secured compared to the maximum torque of the vehicle driving motor to generate the virtual shifting sensation.

The present disclosure addresses the above-described problem of the conventional technology in the electric vehicle equipped with the virtual gear shift system, and provides a control apparatus and method of an electric vehicle configured for generating and providing a virtual shifting sensation in the electric vehicle without a multi-speed transmission to maximize the acceleration of the vehicle.

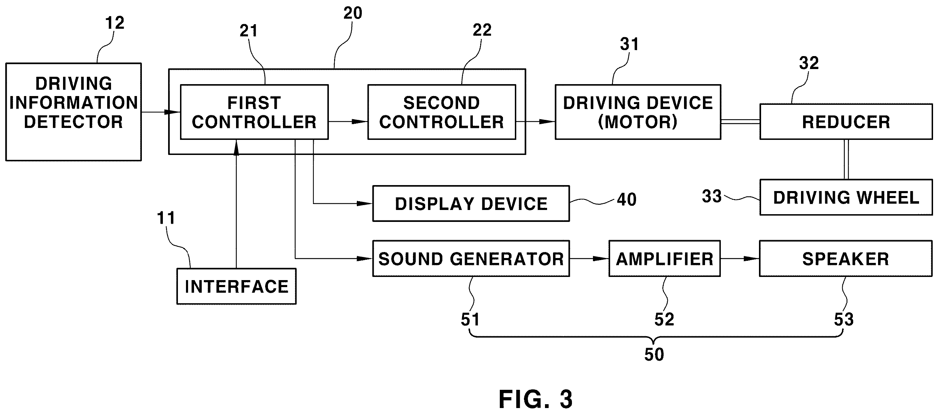

Hereinafter, the configuration of a control apparatus according to an exemplary embodiment of the present disclosure will be described. FIG. 3 is a block diagram showing the configuration of an apparatus for generating a virtual shifting sensation in an exemplary embodiment of the present disclosure. In the following description, a motor that generates the virtual shifting sensation refers to a motor that is a driving device 31 for driving a vehicle, i.e., a vehicle driving motor.

The present disclosure focuses on minimizing an area where the maximum acceleration is not usable to generate the virtual shifting sensation when the virtual gear shift system is operated, thereby reducing an acceleration loss of the vehicle and maximizing the acceleration of the vehicle.

The control apparatus according to an exemplary embodiment of the present disclosure includes the apparatus for generating and implementing the virtual shifting sensation, and the apparatus for generating and implementing the virtual shifting sensation is disposed in a vehicle, and as shown in FIG. 3, includes a driving information detector 12 that detects vehicle driving information, a first controller 21 that generates and outputs a torque command based on the vehicle driving information detected by the driving information detector 12, and a second controller 22 that is configured to control the operation of a motor, which is a driving device 31, depending on the torque command output from the first controller 21.

The driving information detector 12 is a component that determines a driver's requested torque and detects the vehicle driving information required to perform a virtual shifting mode in the vehicle, and the vehicle driving information may include driver's driving input information and vehicle status information.

In an exemplary embodiment of the present disclosure, the driving information detector 12 may include an accelerator pedal detector that detects accelerator pedal input information depending on driver's accelerator pedal operation, and a brake pedal detector that detects brake pedal input information depending on driver's brake pedal operation.

Here, the accelerator pedal detector may be a general accelerator position sensor (APS) that is disposed in an accelerator pedal and outputs an electrical signal depending on a driver's accelerator pedal operation status.

The brake pedal detector may be a general brake pedal sensor (BPS) that is disposed in a brake pedal and outputs an electrical signal depending on driver's brake pedal operation status.

At the present time, the driver's driving input information includes an accelerator pedal input value (APS value) detected by the accelerator pedal detector as a driving input value depending on the driver's accelerator pedal operation, and a brake pedal input value (BPS value) detected by the brake pedal detector as a driving input value depending on the driver's brake pedal operation.

Furthermore, the driving information detector 12 may further include a paddle shifter, a shift lever detector, and a speed detector that detects the speed of a vehicle drivetrain.

At the present time, the driver's driving input information may further include gear shifting input information input by the driver. Here, the gear shifting input information includes paddle shifter input information depending on driver's paddle shifter operation, and shift lever input information depending on driver's shift lever operation. Furthermore, the vehicle status information may include the speed of the vehicle drivetrain detected by the speed detector.

In an exemplary embodiment of the present disclosure, instead of having a separate input device that the driver operates to select and release a manual shifting mode, the paddle shifter and the shift lever may also be used as input devices to select and release the manual shifting mode.

The shift lever input information detected by the shift lever detector and the paddle shifter input information input from the paddle shifter may be input to the first controller 21, and the first controller 21 may be configured to determine a target gear depending on manual gear shifting input information (information indicating the manual shifting operation state) by the driver, that is, the shift lever input information or the paddle shifter input information, during manual shifting in the ON state of the virtual shifting mode.

Accordingly, in the manual shifting mode, virtual shifting may be forcibly performed by operating the shift lever or the paddle shifter by the driver. In the present process, the first controller 21 may detect a driver's gear shifting request from the shift lever input information or the paddle shifter input information, and at the same time, recognize a virtual gear (i.e., a virtual target gear) changed by the driver.

The speed of the vehicle drivetrain may include the rotation speed of the vehicle driving motor which is the driving device 31 (i.e., a motor speed) and the rotation speed of a driving wheel 33 (i.e., a driving wheel speed). In the instant case, the speed detector may include a resolver disposed in the motor, and a wheel speed sensor disposed in the driving wheel 33.

Furthermore, the vehicle driving information may further include a vehicle speed as the vehicle status information, and in the instant case, the driving information detector 12 may further include a vehicle speed detector for detecting the current vehicle driving speed.

The vehicle speed detector may include a wheel speed sensor disposed in the driving wheel 33 of the vehicle. A method of obtaining vehicle speed information from a signal from the wheel speed sensor is a well-known technical matter in the relevant field of the present disclosure, and a description thereof will thus be omitted.

Among the configuration of the apparatus illustrated in FIG. 3, the first controller 21 is configured to determine a motor torque based on real-time vehicle driving information and generates and outputs a motor torque command using the determined motor torque value as a command value.

The first controller 21 is configured to determine the motor torque for vehicle driving from the real-time vehicle driving information obtained and collected through the driving information detector 12 during vehicle driving.

At the present time, the first controller 21 may be configured to determine the motor torque based on the driving input information, such as a driver's accelerator pedal input value (APS value) or brake pedal input value (BPS value), and the vehicle status information, such as a vehicle speed.

A method of determining the motor torque for vehicle driving from the vehicle driving information is a well-known technical matter known to those skilled in the art, and a detailed description thereof will thus be omitted herein.

Furthermore, the first controller 21 is configured to determine a motor torque for vehicle driving and virtual shifting sensation generation from the vehicle driving information in a shifting situation in the ON state of the virtual shifting mode, and for the present purpose, obtains virtual variable information based on the vehicle driving information.

Here, the motor torque for vehicle driving and virtual shifting sensation generation means a total motor torque required to simultaneously generate the virtual shifting sensation and drive the vehicle during the gear shifting process.

The virtual variable information may include a target gear, which may be determined from the driver's gear shifting input information, such as the shift lever input information or the paddle shifter input information, or may be determined based on the real-time vehicle driving information, such as the vehicle speed and the accelerator pedal input value (APS value).

The target gear may be selected and determined based on a driver's manual shifting operation status in the present manner, but the target gear may be automatically selected and determined based on the real-time vehicle driving information in a state in which there is no driver's manual shifting operation.

In the case of automatic shifting without a driver's shift lever input or paddle shifter input in the ON state of the virtual shifting mode, the first controller 21 may be configured to determine the target gear in real time from a gear shifting schedule map that utilizes the vehicle speed and the accelerator pedal input value as inputs thereof.

If the target gear is different from the current gear, i.e., if there is a change in the virtual gear, the first controller 21 is configured to determine that there is a driver's gear shifting request, and performs virtual shifting control to generate a virtual shifting sensation.

Furthermore, when virtual shifting control is being performed by operating the virtual gear shift system, the first controller 21 may obtain a virtual engine speed (RPM) in each virtual gear. At the instant time, the first controller 21 may be configured to determine the virtual engine speed based on the vehicle speed, a dynamic radius of a tire, and a gear ratio set for each virtual gear.

Furthermore, when the driver's gear shifting request is detected, the first controller 21 may be configured to determine a shift class based on the current gear, the target gear, a driver's requested torque, etc., and determine the motor torque for vehicle driving and virtual shifting sensation generation based on the determined shift class and a shifting progress rate (%).

Furthermore, the first controller 21 generates and outputs a final motor torque command using the determined motor torque as a command value, and the second controller 22 is configured to control the operation of the vehicle driving motor depending on the final motor torque command output from the first controller 21. As the operation of the vehicle driving motor is controlled in the present way, the motor torque that allows the driver to experience a shifting sensation may be output.

In the first controller 21, the motor torque for vehicle driving and virtual shifting sensation generation may be determined as a value that changes in a form of a set torque profile from an initial torque TQₙ, which is a motor torque before shifting, to a final torque TQₙ₊₁, which is a motor torque after shifting, as the shifting progress rate (%) increases.

Here, the initial torque TQₙ means a torque required in the current gear (n^{th} gear), and a motor torque when the shifting progress rate (%) is 0% becomes the initial torque TQₙ. Furthermore, the final torque TQₙ₊₁ means a torque required in the target gear (n+1^{th} gear), and a motor torque when the shifting progress rate (%) is 100% becomes the final torque TQₙ₊₁.

As described above, setting data, such as a map in which the torque profile depending on the shifting progress rate (%) is set, may be used by the first controller 21 so that the motor torque that changes during the gear shifting process may be determined.

As a result, the first controller 21 may be configured to determine the motor torque that changes from the initial torque to the final torque, i.e., the motor torque for vehicle driving and virtual shifting sensation generation, as a value depending on the shifting progress rate (%) by the setting data.

Furthermore, the torque profile of the motor torque that changes as the shifting progress rate (%) increases may be set in the first controller 21 differently depending on the shift class, and shift classes may include power-on upshift, power-off upshift, power-on downshift, power-off downshift, and near-stop downshift.

In the above-described shift classes, a case in which the target gear, which is a virtual gear after changing, is a higher gear than the current gear, which is a virtual gear before changing (i.e., the ordinal number of the target gear > the ordinal number of the current shifting stage) is referred to as upshift, and conversely, a case in which the target gear is a lower gear than the current gear (i.e., the ordinal number of the target gear < the ordinal number of the current gear) is referred to as downshift.

Furthermore, in the above-mentioned shift classes, a case in which the driver's requested torque (motor torque) determined in real time from the vehicle driving information is greater than or equal to a predetermined reference torque value may be referred to as power-on, and conversely, a case in which the driver's requested torque is less than the predetermined reference torque value may be referred to as power-off.

The shifting progress rate (%) is defined as the ratio of the degree to which the shifting process has progressed from the time when the virtual shifting started to the entire shifting process as a percentage (%), and the shifting progress rate (%) at the time when the virtual shifting started is 0%, and a shifting progress rate of 100% means that the virtual shifting is completed.

The shifting progress rate (%) may be determined by a method selected among several known methods. For example, time may start to be counted from a point in time when the first controller 21 detects a gear shifting request, that is, from a point in time when the target gear determined based on the vehicle driving information has changed, and the shifting progress rate (%) may be determined as a percentage (%) of the counted time to a predetermined total shifting time.

Otherwise, time may be counted from a point in time when a set time has elapsed from the point in time when the target gear has changed, and the shifting progress rate (%) may be determined as a percentage (%) of the counted time to the predetermined total shifting time.

Here, the point in time when the target gear has changed may be a point in time when a new target gear is determined by a shift schedule map from the vehicle driving information in the current gear, which is the previous target gear.

Otherwise, the shifting progress rate (%) may be determined based on a degree of change in a virtual engine speed obtained in real time during the entire shifting process or a predetermined specific shift phase (e.g., a phase in which a virtual engine speed transition occurs), and specifically, the shifting progress rate (%) may be determined from the virtual engine speed obtained in real time, a target engine speed based on the current gear, and a target engine speed based on the target gear.

That is, the shifting progress rate (%) may be expressed as a percentage (%) indicating where the current virtual engine speed obtained in real time is between the target engine speed based on the current gear and the target engine speed based on the target gear, and more specifically, the shifting progress rate (%) may be determined as a percentage value of a speed difference between the current virtual engine speed obtained in real time and the target engine speed based on the current gear, with respect to a speed difference between the target engine speed based on the target gear and the target engine speed based on the current gear.

In the above description, the first controller 21 is configured to determine the motor torque for vehicle driving and virtual shifting sensation generation during the shifting process using the setting data, such as the map in which the torque profile depending on the shifting progress rate (%) is preset, but as an exemplary embodiment of the present disclosure, the motor torque for vehicle driving and virtual shifting sensation generation may be determined as a value that changes over time by a mathematical formula that utilizes predetermined variable information, such as an initial torque, a preset torque change slope, the current gear, a virtual gear ratio in the current gear, the target gear, a virtual gear ratio in the target gear, etc.

Among the configuration of the apparatus shown in FIG. 3, the first controller 21 may be a vehicle control unit (VCU) that generates a motor torque command based on vehicle driving information in a general electric vehicle.

The second controller 22 is a controller that receives the final motor torque command output from the first controller 21 and is configured to control the operation of the motor, which is the driving device 31, and may be a known motor control unit (MCU) that drives a motor and is configured to control the operation of the vehicle driving motor through an inverter in a general electric vehicle.

In an exemplary embodiment of the present disclosure, the torque and rotational power output from the motor, which is the driving device 31, are reduced by a reducer 32 and then transmitted to the driving wheels 33, as shown in FIG. 3, and when the operation of the vehicle driving motor is controlled by the second controller 22 depending on the final motor torque command output from the first controller 21, a motor torque that may induce vehicle vibration and vehicle behavior simulating a shifting sensation by an actual transmission may be output during vehicle driving.

In an exemplary embodiment of the present disclosure, the first controller 21 and the second controller 22 are controllers involved in a control process configured to produce virtual shifting effects, such as the virtual shifting sensation, in the vehicle and the driving control process of the vehicle.

In explaining the configuration of the apparatus according to an exemplary embodiment of the present disclosure, a control subject has been divided into the first controller 21 and the second controller 22, as described above, but the control process configured to produce the virtual shifting effects of the vehicle and the driving control process of the vehicle may be performed by a single integrated control element instead of a plurality of controllers.

The plurality of controllers and the single integrated control element may all be collectively referred to as "controllers", and the control process of the present disclosure may be performed by the controllers. In the following description, a "controller 20" may collectively refer to the first controller 21 and the second controller 22.

Furthermore, the apparatus for generating and implementing the virtual shifting sensation according to an exemplary embodiment of the present disclosure may further include an interface 11 disposed to allow the driver to select and input one of the ON state and the OFF state of the virtual shifting mode.

As the interface 11, any means that may allow the driver to selectively operate the ON state and the OFF state of the virtual shifting mode in the vehicle and output an electric signal depending on the on or OFF state may be used, and for example, an input device, such as buttons or switches disposed in the vehicle, an input device of an audio, video, and navigation (AVN) system, a touchscreen, etc. may be used.

The interface 11 may be connected to the first controller 21, and accordingly, when the driver operates the on or OFF state through the interface 11, an on signal or an off signal from the interface 11 may be input to the first controller 21. As a result, the first controller 21 may recognize the on or off operation status of the virtual shifting mode by the driver.

In an exemplary embodiment of the present disclosure, when the driver turns the virtual shifting mode on through the interface 11, the virtual gear shift system is operated to perform a virtual gear shifting function. The virtual gear shifting function is a function that generates and provides the above-described virtual gear shifting effects including the virtual shifting sensation in an electric vehicle.

Furthermore, when the driver turns the virtual shifting mode off through the interface 11, the virtual gear shifting function is deactivated, and the electric vehicle is driven in the normal driving mode without generating the virtual shifting sensation.

If the above-described interface 11 is an input device disposed in the vehicle, although not shown in FIG. 3, a mobile device may be used as the interface 11 instead of the input device of the vehicle, and the driver may also operate the ON state and the OFF state of the virtual shifting mode through the mobile device.

The mobile device may be able to be communicatively connected to a device in the vehicle, for example, the first controller 21, and for this purpose, an input/output communication interface for communication connection between the mobile device and the first controller 21 is used.

Furthermore, the apparatus for generating and implementing the virtual shifting sensation according to an exemplary embodiment of the present disclosure may further include a display device 40 that produces the visual effects of virtual shifting, and an audio device 50 that produces the auditory effects of virtual shifting, which are disposed in the vehicle.

The display device 40 and the audio device 50 may be connected to the first controller 21, and may be provided so that the operation of the display device 40 and the audio device 50 is controlled depending on a control signal output from the first controller 21.

The display device 40 may be a display device in a cluster disposed in front of a driver's seat of the vehicle, which displays virtual variable information determined to correspond to the current driving status of the vehicle during vehicle driving, that is, real-time virtual engine speed and virtual gear, to provide the information to the driver.

When the first controller 21 outputs a control signal for displaying the determined virtual engine speed and virtual gear to the display device 40, the display device 40 is operated depending on the output control signal to display the virtual engine speed and the virtual gear.

Furthermore, the audio device 50 may include a sound generator 51, an amplifier 52, and a speaker 53 that are operated depending on a control signal, that is, a sound control signal, output from the first controller 21.

The first controller 21 generates and outputs the sound control signal corresponding to the virtual engine speed, and when the output sound control signal is input to the sound generator 51 of the audio device 50, the sound generator 51 is operated depending on the input sound control signal to generate and output a virtual sound signal depending on the sound control signal.

The virtual sound signal output from the sound generator 51 is amplified by the amplifier 52 of the audio device 50, and the amplified virtual sound signal is converted into a virtual engine sound and the virtual engine sound is output through the speaker 53 of the audio device 50 disposed in the interior of the vehicle.

The configuration of the control apparatus of the electric vehicle according to an exemplary embodiment of the present disclosure has been described in detail above. Hereinafter, a control method of generating and implementing a virtual shifting sensation will be described in more detail.

In the ON state of the virtual shifting mode, during at least a portion of the shifting process in which the motor torque changes from the initial torque in the current gear to the final torque in the target gear, the motor torque for vehicle driving and virtual shifting sensation generation may be determined as a torque value higher than the initial torque or the final torque.

For example, to generate and provide push-feel, which is a specialized shifting sensation experienced in high-performance vehicles among internal combustion engine vehicles, in a virtual engine speed transition section after a torque transition section, the motor torque for vehicle driving and virtual shifting sensation generation may be increased to a torque greater than the final torque in the target gear and then reduced to the final torque.

Here, push-feel refers to a shifting sensation that provides a feeling of pushing the vehicle from behind during vehicle driving. Furthermore, the torque transition section is a section in which the initial torque TQₙ in the current gear (n^{th} gear) is reduced to the final torque TQₙ₊₁ required in the target gear (n+1^{th} gear) during the entire shifting process.

The virtual engine speed transition section is a section implemented after the torque transition section, and is a section in which the virtual engine speed, which is real-time virtual variable information determined from the vehicle driving information, transitions from a target engine speed based on the current gear to a target engine speed based on the target gear.

Considering that the motor torque for vehicle driving and virtual gear shifting generation may be determined as a torque value higher than the initial torque in the current gear or the final torque in the target gear, conventionally, as shown in FIG. 2, a torque value lower than the torque value of the maximum torque curve by a certain margin is used as the motor torque (the minimum torque or the maximum torque) for each virtual gear. The torque value of the maximum torque curve is the maximum allowable torque of the corresponding motor depending on the motor speed (or vehicle speed).

In the conventional technology, when the virtual gear shift system is operated, the maximum motor torque value specified for each virtual gear among the torque values of the maximum torque curve shown in FIG. 1 limits the motor torque for vehicle driving and virtual shifting sensation generation. Therefore, to prevent the motor torque for vehicle driving and virtual shifting sensation generation from being limited as described above, the motor torque (the minimum torque or the maximum torque) for each virtual gear used in virtual shifting control is set to a value lower than the torque value of the maximum torque curve by a certain margin, as shown in FIG. 2.

Referring to FIG. 2, it may be confirmed that the torque value set for each virtual gear among the torque values of the maximum torque curve when the virtual gear shift system is in operation (e.g., 7000 Nm in 1st gear) is set to be lower than the maximum motor torque value (7800 Nm in FIG. 1), which is the limit torque that limits the motor torque in the normal driving mode.

As described above, the maximum torque of the vehicle driving motor tends to decrease rapidly at a certain speed due to the hardware characteristics of the motor, and in the conventional virtual gear shift system, the torque margin is secured to implement push-feel, which is a specialized shifting sensation experienced in high-performance vehicles among internal combustion engine vehicles, as shown in FIG. 2, but there is a problem that the motor output is not usable up to its maximum to generate the virtual shifting sensation and an acceleration loss torque area occurs.

Therefore, to solve the above problem, in an exemplary embodiment of the present disclosure, in a virtual shifting situation in which a gear shifting request is detected in the ON state of the virtual shifting mode, the maximum torque characteristic information for limiting the motor torque is converted from the maximum torque characteristic information for the normal driving mode, which is a virtual shifting deactivation mode, to the maximum torque characteristic information for the virtual shifting mode.

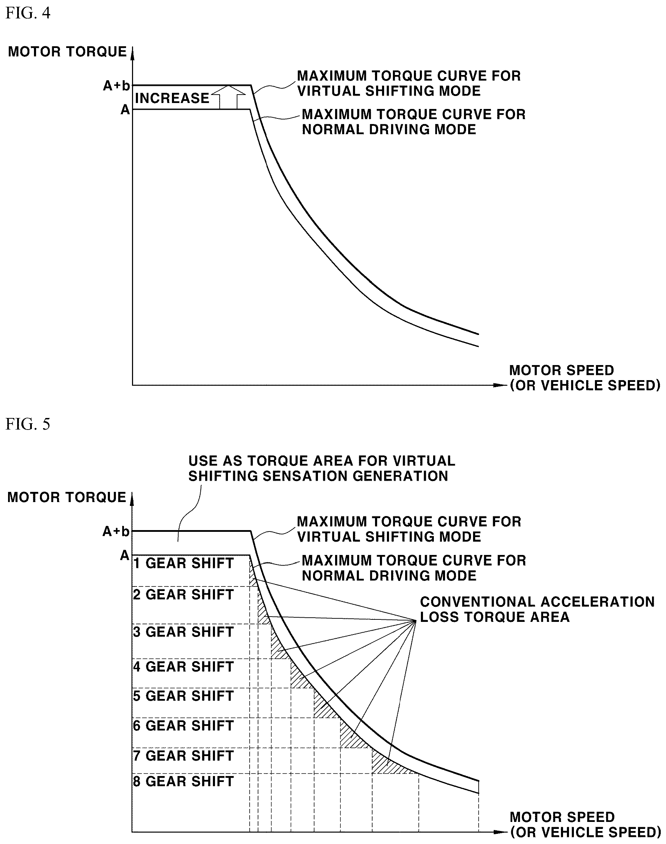

FIG. 4 is a diagram for explaining an area in which motor and battery outputs are temporarily increased in an exemplary embodiment of the present disclosure, and FIG. 5 is a diagram showing a maximum torque curve for the normal driving mode and a maximum torque curve for the virtual shifting mode in an exemplary embodiment of the present disclosure.

Referring to FIG. 4 and FIG. 5, it may be confirmed that the area in which the vehicle driving motor and battery outputs are temporarily increased is set compared to the motor output area in the normal driving mode. Although FIG. 4 and FIG. 5 illustrate that the horizontal axis represents a vehicle speed instead of the motor torque, the vehicle speed may be replaced with the motor speed.

As shown in these figures, the maximum motor torque for the virtual shifting mode is set to a greater value than the maximum motor torque for the normal driving mode under the same motor speed or vehicle speed conditions, and the maximum motor torque for the virtual shifting mode is set to a greater value than the maximum motor torque for the normal driving mode in some sections or all sections of the motor speed or the vehicle speed.

Accordingly, the maximum motor torque in the virtual shifting mode is increased compared to the maximum motor torque in the normal driving mode, and a motor torque area that may be utilized in the virtual shifting mode may be expanded compared to the normal driving mode.

In an exemplary embodiment of the present disclosure, the maximum torque characteristic information for the normal driving mode may be information including the existing maximum motor torque curve, and a torque value indicated by the maximum motor torque curve in the maximum torque characteristic information for the normal driving mode, that is, the maximum motor torque value depending on the motor speed (or vehicle speed), has the meaning of the maximum torque capacity or the maximum allowable torque based on the corresponding motor.

Furthermore, the maximum motor torque (maximum torque capacity or maximum allowable torque based on the motor) value of the maximum torque characteristic information for the normal driving mode has the meaning of a rated operating point upper limit determined in consideration of the durability of power electronic (PE) components of an electric vehicle including a motor and a battery.

Furthermore, the maximum torque characteristic information for the virtual shifting mode is used to maximize the acceleration of the vehicle, and a torque value following the maximum torque curve for the virtual shifting mode is set to a greater value than the existing maximum torque capacity (maximum allowable torque or rated operating point upper limit).

As is known, in electric vehicles, the acceleration performance of the vehicle is determined depending on the maximum torque capacity that a motor may generate. Furthermore, the maximum torque capacity of the vehicle driving motor is affected by an inverter that is configured to control the motor, the maximum supply capacity of the battery that supplies power, and the power electronic (PE) components.

In general, the maximum capacity of the vehicle driving motor is limited to a capacity that is usable within a range where safety is guaranteed, and the present limit value is adjusted so that thermodynamic balance may be maintained in a normal state.

Therefore, if a load exceeding the limit value is applied, more torque than a set value may be generated to improve the acceleration of the vehicle, but an amount of heat generated from the related power electronic components may excessive and thus lead to a vehicle fire.

Here, the normal state may mean maintaining the same conditions or state for a sufficiently long time. Therefore, the maximum capacity of the power electronic components set based on the normal state is conservatively set to be lower than a capacity that may be allowed momentarily.

Therefore, if the premise is that the power electronic components are used only for a short time, not in the normal state, the maximum allowable load capacity of the power electronic components may be expanded compared to the capacity based on the normal state, and this may be used to momentarily increase the output of the power electronic components, such as the motor.

In the present way, considering that the output of the vehicle driving motor and the battery may be controlled higher than the maximum capacity in the existing normal state for a set short time period in a general electric vehicle, the maximum allowable torque of the vehicle driving motor is increased higher than the maximum allowable torque value defined in the maximum torque characteristic information for the normal driving mode in a shifting situation after a gear shifting request is detected.

That is, in an exemplary embodiment of the present disclosure, the maximum torque characteristic information for the virtual shifting mode is additionally used separately from the maximum torque characteristic information for the normal driving mode, and the maximum torque characteristic information for the virtual shifting mode may be used only during virtual shifting control.

Referring to FIG. 5, it may be confirmed that the same maximum torque curve as in FIG. 1 and FIG. 2 is illustrated as the maximum torque characteristic information for the normal driving mode, and the maximum motor torque for each virtual gear of the maximum torque curve for the virtual shifting mode additionally set and used in an exemplary embodiment of the present disclosure is set to a greater value than the conventional maximum motor torque for each virtual gear shown in FIG. 2.

In FIG. 5, a torque area between the maximum torque curve for the virtual shifting mode and the maximum torque curve for the normal driving mode is an operating point area utilized to increase the acceleration in the virtual shifting mode.

The motor torque area expanded in the instant way during virtual shifting control is an area used to temporarily improve the performance of the motor, and in an exemplary embodiment of the present disclosure, a time for which the expanded area is usable is limited to minimize deterioration of the durability of the vehicle driving motor and the battery. That is, in the virtual shifting mode, the motor torque may be controlled to be higher than the maximum motor torque for the normal driving mode only for a short time period within a certain level.

For example, if the increased maximum motor torque for the virtual shifting mode is capable of being used so that a time for which the increased maximum motor torque for the virtual shifting mode exceeds the motor torque allowed by the maximum torque characteristic information for the normal driving mode may be up to 10 seconds based on the accumulated time, the motor torque in the virtual shifting mode may be controlled to be higher than the maximum motor torque for the normal driving mode under the condition that the total accumulated time is within 10 seconds, which is a set time (a first set time described below).

In the present way, by generating a virtual shifting sensation using the maximum torque characteristic information for the virtual shifting mode within the set time, it is possible to increase the acceleration of the vehicle in a shifting situation without causing durability problems of the power electronic components, such as the vehicle driving motor and the battery.

Since, in general, in the virtual shifting mode, the motor torque for virtual shifting sensation generation is temporarily output only for a short time period of less than 1 second, if the set time is set appropriately, it is possible to increase the acceleration in the virtual shifting mode without causing problems with durability and deterioration problems of the motor and the battery.

In an exemplary embodiment of the present disclosure, in determining the total accumulated time, the time for which the motor torque used to generate the virtual shifting sensation exceeds the maximum motor torque for the normal driving mode is counted and accumulated, but when the motor torque for vehicle driving and generating the virtual shifting sensation is equal to or less than the maximum motor torque for the normal driving mode midway, a time for which the motor torque for vehicle driving and virtual shifting sensation generation is less than or equal to the maximum motor torque for the normal driving mode is subtracted from an accumulated time up to now.

Furthermore, when the total accumulated time reaches the first set time (e.g., 10 seconds), the maximum torque characteristic information for the normal driving mode is used even in the shifting situation thereafter, and the motor torque is limited so as not to exceed the maximum motor torque for the normal driving mode.

Thereafter, a time for which the motor torque is limited not to exceed the maximum motor torque for the normal driving mode is counted, and when the accumulated time reaches a second set time, the motor torque for vehicle driving and virtual shifting sensation may be determined again using the maximum torque characteristic information for the virtual shifting mode in the ON state of the virtual shifting mode, and the operation of the vehicle driving motor may be controlled with the determined motor torque.

Accordingly, in an exemplary embodiment of the present disclosure, the motor torque that exceeds the maximum allowable torque of the vehicle driving motor may be used as the motor torque for generating the virtual shifting sensation only within the set time, thereby being capable of minimizing deterioration problems that may occur in the vehicle driving motor and the battery, and at the same time, minimizing the acceleration loss torque area to maximize the acceleration of the vehicle.

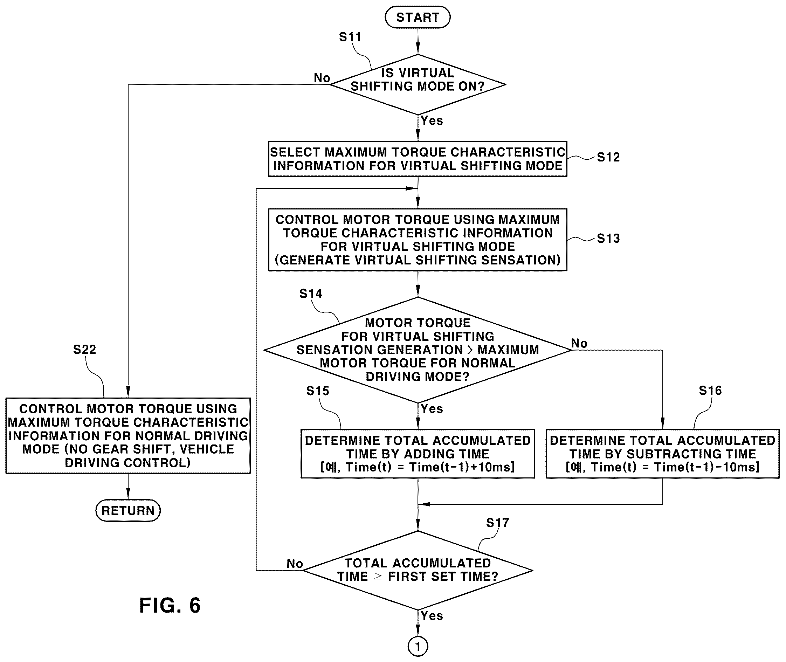

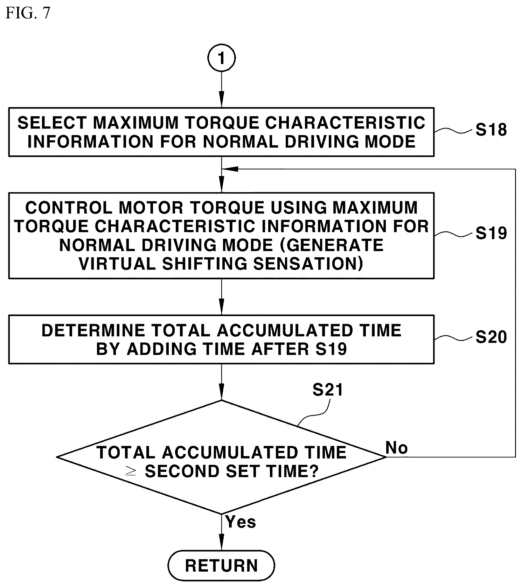

FIG. 6 and FIG. 7 are flowcharts showing a control method according to an exemplary embodiment of the present disclosure. With reference to these figures, a method of generating a virtual shifting sensation of an electric vehicle according to an exemplary embodiment of the present disclosure will be described as follows.

The controller 20 is configured to determine whether a driver activates the virtual shifting function by turning on the virtual shifting mode through the interface 11 (S11). If the driver turns off the virtual shifting mode and the virtual gear shifting function is not activated, the vehicle is driven in the normal driving mode.

That is, the maximum torque characteristic information for the normal driving mode is selected as the maximum torque characteristic information to be used for motor torque control, and motor output control using the maximum torque characteristic information for the normal driving mode is performed by the controller 20 when the vehicle is driven in the normal driving mode.

On the other hand, if the virtual shifting mode is turned on, the controller 20 selects the maximum torque characteristic information for the virtual shifting mode as the maximum torque characteristic information to be used for motor torque control for vehicle driving and virtual shifting sensation generation (S12).

Thereafter, if there is a gear shifting request, the controller 20 is configured to determine the motor torque for vehicle driving and virtual shifting sensation generation using the maximum torque characteristic information for the virtual shifting mode, and generates and outputs a motor torque command using the determined motor torque as a command value so that the operation of the vehicle driving motor is controlled depending on the motor torque command (S13).

In the ON state of the virtual shifting mode, the maximum torque characteristic information for the virtual shifting mode is used, and thus, the motor torque for vehicle driving and virtual shifting sensation generation may be determined and utilized within a maximum motor torque (maximum allowable torque) that is greater than the maximum motor torque for the normal driving mode. Therefore, an acceleration loss torque area may be minimized, and the acceleration of the vehicle may be maximized.

Thereafter, the controller 20 is configured to determine whether the motor torque for vehicle driving and virtual shifting sensation generation exceeds the maximum motor torque (maximum allowable torque) for the normal driving mode during the above-described virtual shifting control (S14).

At the present time, the controller 20 compares the current motor torque for vehicle driving and virtual shifting sensation generation with the maximum motor torque for the normal driving mode corresponding to a current speed, i.e., a current motor speed (or vehicle speed), obtained through the driving information detector 12.

Furthermore, the controller 20 counts and accumulates a time for which the motor torque for vehicle driving and virtual shifting sensation generation exceeds the maximum motor torque for the normal driving mode to determine the total accumulated time (S15 and S16). At the instant time, the time is added and counted to be accumulated until the total accumulated time reaches the first set time (e.g., 10 seconds) (S15).

If, as the total accumulated time is determined until the total accumulated time reaches the first set time, the motor torque for vehicle driving and virtual shifting sensation generation decreases to the maximum motor torque for the normal driving mode or less, the controller 20 subtracts a time for which the motor torque is maintained at or below the maximum motor torque for the normal driving mode from an accumulated time up to now (S16).

Furthermore, the determined total accumulated time is compared with the first set time (S17), and if the total accumulated time is less than or equal to the first set time, the controller 20 continues to perform motor output control using the maximum torque characteristic information for the virtual shifting mode during motor control for vehicle driving and virtual shifting sensation generation (S13).

In the present way, by utilizing a temporary output increase area as the motor torque area, the motor torque in the virtual shifting mode may be expanded within the maximum motor torque (maximum allowable torque) for the virtual shifting mode, thereby being capable of increasing the acceleration of the vehicle.

On the other hand, if the total accumulated time reaches the first set time in Operation S17, the controller 20 converts the maximum torque characteristic information to be used for motor control for vehicle driving and virtual shifting sensation generation from the maximum torque characteristic information for the virtual shifting mode to the maximum torque characteristic information for the normal driving mode (S18). That is, the motor torque in the virtual shifting mode is limited depending on the maximum motor torque (maximum allowable torque) of the maximum torque characteristic information for the normal driving mode.

Thereafter, in the state in which the maximum torque characteristic information for the normal driving mode is selected as the maximum torque characteristic information to be used for motor torque control, even in the ON state of the virtual shifting mode, the controller 20 performs motor output control using the maximum torque characteristic information for the normal driving mode not only during motor torque control for vehicle driving but also during motor torque control for vehicle driving and virtual shifting sensation generation (S19).

Furthermore, after the maximum torque characteristic information has been switched from the maximum torque characteristic information for the virtual shifting mode to the maximum torque characteristic information for the normal driving mode, the controller 20 counts and accumulates time again (S20).

Furthermore, the controller 20 compares the newly counted total accumulated time with a second set time (e.g., 10 seconds) (S21), and if the total accumulated time reaches the second set time, is configured to determine whether the virtual shifting mode is still in the ON state (returns to Operation S11).

At the present time, if the newly counted total accumulated time is less than the second set time (e.g., 10 seconds) (S21), the controller 20 returns to Operation S19 to perform motor output control using the maximum torque characteristic information for the normal driving mode not only during motor torque control for vehicle driving but also during motor torque control for vehicle driving and virtual shifting sensation generation (S19).

At the present time, if the virtual shifting mode is in the ON state, the above-descried control is repeated, i.e., the controller 20 selects the maximum torque characteristic information for the virtual shifting mode as the maximum torque characteristic information to be used for motor torque control for vehicle driving and virtual shifting sensation generation (S12).

Thereafter, the controller 20 is configured to determine the motor torque for vehicle driving and virtual shifting sensation generation within the maximum motor torque (maximum allowable torque) for the virtual shifting mode, and generates and outputs a motor torque command using the determined motor torque as a command value so that the operation of the vehicle driving motor is controlled depending on the motor torque command (S13).

This control process is performed until the total accumulated time for which the motor torque for vehicle driving and virtual shifting sensation generation exceeds the maximum motor torque for the normal driving mode reaches the first set time again after the maximum torque characteristic information for the virtual shifting mode is selected, and if the total accumulated time reaches the first set time, the maximum torque characteristic information for the normal driving mode is selected again and used for motor torque control.

As is apparent from the above description, a control apparatus and method of an electric vehicle according to an exemplary embodiment of the present disclosure may provide a multi-speed shifting sensation similar to that generated in an internal combustion engine vehicle, thereby being capable of increasing driving fun in the electric vehicle without a multi-speed transmission.

Furthermore, the control apparatus and method of an electric vehicle according to an exemplary embodiment of the present disclosure may use a more expanded motor torque area in a virtual shifting mode compared to a normal driving mode, in generating and providing a virtual multi-speed shifting sensation, thereby being capable of minimizing an acceleration loss torque area and maximizing the acceleration of the vehicle.

Although the exemplary embodiments of the present disclosure have been described in detail above, the scope of the present disclosure is not limited thereto, and various modifications and improvements made by those skilled in the art using the basic concept of the present disclosure defined in the following claims are also included in the scope of the present disclosure.

## Claims

1. A control apparatus of an electric vehicle, the control apparatus comprising:
a controller determining a motor torque for vehicle driving and virtual shifting sensation generation while driving of the vehicle in a virtual shifting mode using virtual variable information determined based on vehicle driving information collected while the driving; and
a vehicle driving motor controlled by the controller to output the determined motor torque,
wherein the controller has maximum torque characteristic information configured so that a maximum allowable torque to limit the motor torque is set,
wherein the maximum torque characteristic information comprises maximum torque characteristic information for a normal driving mode to limit the motor torque while driving in the normal driving mode and maximum torque characteristic information for a virtual shifting mode to limit the motor torque while driving in the virtual shifting mode, and
wherein a maximum allowable torque of the maximum torque characteristic information for the virtual shifting mode is set to a greater value than a maximum allowable torque of the maximum torque characteristic information for the normal driving mode.

2. The control apparatus of claim 1, wherein the maximum torque characteristic information is configured so that the maximum allowable torque is set to a value corresponding to a motor speed or a vehicle speed.

3. The control apparatus of claim 2, wherein the maximum allowable torque of the maximum torque characteristic information for the virtual shifting mode is set to a greater value than the maximum allowable torque of the maximum torque characteristic information for the normal driving mode under the same motor speed conditions or the same vehicle speed conditions.

4. The control apparatus of claim 2, wherein the maximum allowable torque of the maximum torque characteristic information for the virtual shifting mode is set to a greater value than the maximum allowable torque of the maximum torque characteristic information for the normal driving mode in some sections or all sections of the motor speed, or in some sections or all sections of the vehicle speed.

5. The control apparatus of claim 2, wherein the maximum allowable torque of the maximum torque characteristic information for the normal driving mode is a rated operating point upper limit determined in consideration of durability of power electronic components comprising a battery and the vehicle driving motor disposed in the vehicle.

6. The control apparatus of claim 1, further comprising:
an input device operatively connected to the controller and configured to turn on the virtual shifting mode,
wherein the controller selects the maximum torque characteristic information for the virtual shifting mode as the maximum torque characteristic information based on determining that the virtual shifting mode is turned on through the input device.

7. The control apparatus of claim 1, wherein the controller:
accumulates a time for which the motor torque for vehicle driving and virtual shifting sensation generation exceeds the maximum allowable torque of the maximum torque characteristic information for the normal driving mode;
limits the motor torque while driving in the virtual shifting mode based on the maximum torque characteristic information for the virtual shifting mode until a total accumulated time reaches a first set time; and
limits the motor torque while driving in the virtual shifting mode based on the maximum torque characteristic information for the normal driving mode based on determining that the total accumulated time reaches the first set time.

8. The control apparatus of claim 7, wherein the controller, during the accumulation of the time for which the motor torque for vehicle driving and virtual shifting sensation generation exceeds the maximum allowable torque of the maximum torque characteristic information for the normal driving mode, determines the total accumulated time by subtracting a time for which the motor torque for vehicle driving and virtual shifting sensation generation is less than or equal to the maximum allowable torque of the maximum torque characteristic information for the normal driving mode from an accumulated time up to a current time.

9. The control apparatus of claim 7, wherein the controller:
counts and accumulates a new time in a state in which the total accumulated time reaches the first set time and the motor torque while driving in the virtual shifting mode is limited based on the maximum torque characteristic information for the normal driving mode; and
limits the motor torque while driving in the virtual shifting mode based on the maximum torque characteristic information for the virtual shifting mode based on determining that a newly accumulated time reaches a second set time.

10. A control method of an electric vehicle, the control method comprising:
collecting, by a controller, vehicle driving information while driving;
determining, by the controller, a motor torque for vehicle driving and virtual shifting sensation generation while driving of the vehicle in a virtual shifting mode using virtual variable information determined based on the vehicle driving information collected while driving; and
controlling, by the controller, a vehicle driving motor to output the determined motor torque,
wherein the controller limits the motor torque depending on a maximum allowable torque set in maximum torque characteristic information,
wherein the maximum torque characteristic information comprises maximum torque characteristic information for a normal driving mode to limit the motor torque while driving in the normal driving mode and maximum torque characteristic information for a virtual shifting mode to limit the motor torque while driving in the virtual shifting mode, and
wherein a maximum allowable torque of the maximum torque characteristic information for the virtual shifting mode is set to a greater value than a maximum allowable torque of the maximum torque characteristic information for the normal driving mode.

11. The control method of claim 10, wherein the maximum torque characteristic information is configured so that the maximum allowable torque is set to a value corresponding to a motor speed or a vehicle speed.

12. The control method of claim 10, wherein the maximum allowable torque of the maximum torque characteristic information for the virtual shifting mode is set to a greater value than the maximum allowable torque of the maximum torque characteristic information for the normal driving mode under the same motor speed conditions or the same vehicle speed conditions.

13. The control method of claim 10, wherein the maximum allowable torque of the maximum torque characteristic information for the virtual shifting mode is set to a greater value than the maximum allowable torque of the maximum torque characteristic information for the normal driving mode in some sections or all sections of a motor speed, or in some sections or all sections of a vehicle speed.

14. The control method of claim 10, further comprising:
determining, by the controller, whether the virtual shifting mode is turned on through an input device operatively connected to the controller,
wherein the controller selects the maximum torque characteristic information for the virtual shifting mode as the maximum torque characteristic information based on determining that the virtual shifting mode is turned on through the input device.

15. The control method of claim 10, further comprising:
accumulating, by the controller, a time for which the motor torque for vehicle driving and virtual shifting sensation generation exceeds the maximum allowable torque of the maximum torque characteristic information for the normal driving mode;
limiting, by the controller, the motor torque while driving in the virtual shifting mode based on the maximum torque characteristic information for the virtual shifting mode until a total accumulated time reaches a first set time; and
limiting, by the controller, the motor torque while driving in the virtual shifting mode based on the maximum torque characteristic information for the normal driving mode based on determining that the total accumulated time reaches the first set time.
